# EUROPEAN PATENT SPECIFICATION

(11) **EP 4 166 811 B1**
(45) Date of publication and mention of the grant of the patent: **29.10.2025**
(21) Application number: 21822017.6
(22) Date of filing: 31.05.2021
(51) Int. Cl.: F16F 9/34, F16F 9/32, B01D 35/04, B01D 29/56, B01D 29/05, B01D 29/03, B01D 29/11, B01D 29/58, F16F 9/18, B01D 35/02

(54) **ELECTRO-HYDRAULIC PROPORTIONAL VALVE AND SHOCK ABSORBER HAVING CONTINUOUS DAMPING CONTROL**
ELEKTROHYDRAULISCHES PROPORTIONALVENTIL UND STOSSDÄMPFER MIT KONTINUIERLICHER DÄMPFUNGSSTEUERUNG
SOUPAPE PROPORTIONNELLE ÉLECTRO-HYDRAULIQUE ET AMORTISSEUR À COMMANDE D'AMORTISSEMENT CONTINUE

(30) Priority: 11.06.2020 CN 202010530808
(43) Date of publication of application: 19.04.2023
(73) Proprietor: China Faw Co., Ltd., Changchun, Jilin 130011 (CN)
(72) Inventor: DOU, Kaifang, Changchun, Jilin 130011 (CN); ZHENG, Wenbo, Changchun, Jilin 130011 (CN); YU, Zhen, Changchun, Jilin 130011 (CN); LI, Junwei, Changchun, Jilin 130011 (CN); WANG, Shiwei, Changchun, Jilin 130011 (CN)
(74) Representative: Dehns Germany Partnerschaft mbB
(86) International application number: PCT/CN2021/097132
(87) International publication number: WO 2021/249219

(56) References cited:
- CN-A- 102 678 683
- CN-A- 104 083 917
- CN-A- 111 692 266
- CN-U- 202 579 469
- CN-U- 203 743 546
- CN-U- 205 977 858
- CN-Y- 201 027 725
- JP-A- H11 230 119
- KR-A- 20090 081 812
- US-A- 5 217 212
- US-A1- 2017 119 205
- US-B1- 6 800 194
- US-B2- 6 722 384

## Description

### Technical Field

The invention relates to the technical field of automobiles, and relates to, for example, an electro-hydraulic proportional valve assembly and a continuous damping control damper.

### Background

In a normal work process of a continuous damping control damper, large impurity particles will be generated from its internal abrasion. In addition, impurities will also be generated from its internal contamination owing to substandard cleanliness of the production line. Upon entering the electro-hydraulic proportional valve, these impurities will jam the electro-hydraulic proportional valve, further affecting the normal work of the continuous damping control damper.

In the related art, one magnet is arranged at a bottom of the continuous damping control damper, so as to attract and remove the impurities.

However, in the related art, although the metal impurities are attracted by the magnet on account of its magnetism, the non-metal impurities are not attracted and will still jam the electro-hydraulic proportional valve upon entering the electro-hydraulic proportional valve. In the normal work process of the continuous damping control damper, as the impurities flow along with the oil, some impurities enter the electro-hydraulic proportional valve before being attracted by the magnet.

A pilot-type overflow valve is disclosed in Document D1 (CN203743546U).

### Summary

The invention is defined by the appended claims.

The invention provides an electro-hydraulic proportional valve assembly, which is able to prevent impurities in oil from entering the electro-hydraulic proportional valve assembly effectively and ensure that the electro-hydraulic proportional valve assembly works normally.

According to the invention an electro-hydraulic proportional valve assembly is provided. **The** electro-hydraulic proportional valve assembly includes an electro-hydraulic proportional valve, the electro-hydraulic proportional valve is provided with a first inlet and outlet and a second inlet and outlet, a filter device being arranged in each of the first inlet and outlet and the second inlet and outlet; where the filter device includes:
a housing internally provided with an accommodation cavity; and
a filter assembly arranged in the accommodation cavity, and configured to filter oil entering the electro-hydraulic proportional valve.

According to the invention, the filter assembly divides the accommodation cavity into a first flow passage and a second flow passage;
the first flow passage extends in an axial direction of the accommodation cavity, and is arranged coaxial with the accommodation cavity;
the second flow passage is positioned between the filter assembly and an inner wall of the housing;
oil entering the filter device enters into the first flow passage by the second flow passage and the filter assembly in sequence, and then enters the electro-hydraulic proportional valve by the first flow passage; and or,
oil entering the filter device enters into the second flow passage by the first flow passage and the filter assembly in sequence, and then enters the electro-hydraulic proportional valve via the second flow passage.

According to the invention, two ends of the first flow passage are provided with openings, and a first one-way unloading valve is arranged in the first flow passage, the first one-way unloading valve being configured as follows: when oil cannot pass through the filter assembly, oil flowing in a first direction is able to open the first one-way unloading valve, so that the first flow passage is in an opened state, and the oil is able to pass through the filter device by the first flow passage.

In some embodiments, two ends of the second flow passage are provided with openings, and a second one-way unloading valve is arranged in the second flow passage, the second one-way unloading valve being configured as follows: when oil cannot pass through the filter assembly, oil flowing in a second direction is able to open the second one-way unloading valve, so that the second flow passage is in an opened state, and oil is able to pass through the filter device by the second flow passage.

The second direction is opposite to the first direction.

In some embodiments, when one of the first one-way unloading valve and the second one-way unloading valve is opened, the other one is in a closed state.

In some embodiments, a plurality of second one-way unloading valves are arranged in the second flow passage at intervals in a circumferential direction of an inner wall of the accommodation cavity.

In some embodiments, the second flow passage includes a plurality of flow sub-passages, the plurality of flow sub-passages being arranged at intervals in the circumferential direction of the inner wall of the accommodation cavity, and each flow sub-passage being internally provided with one second one-way unloading valve.

In some embodiments, a first side of the housing is provided with a first opening, and a second side of the housing is provided with a second opening and a third opening;
a first end of the first flow passage is in communication with the first opening, and a second end of the first flow passage is in communication with the second opening; and
a first end of the second flow passage is in communication with the first opening, and a second end of the second flow passage is in communication with the third opening.

In some embodiments, the filter assembly includes a plurality of stages of filter portions.

The invention provides a continuous damping control damper, which may prevent impurities in oil from entering an electro-hydraulic proportional valve assembly effectively and ensure that the electro-hydraulic proportional valve assembly works normally, and further ensure that the continuous damping control damper works normally.

An embodiment provides a continuous damping control damper, including the electro-hydraulic proportional valve assembly described above.

### Brief Description of the Drawings

Fig. 1 is a schematic diagram of a flow direction of oil in a continuous damping control damper when a piston rod moves upwards as provided in an embodiment of the invention;
Fig. 2 is a schematic diagram of a flow direction of oil in a continuous damping control damper when a piston rod moves downwards as provided in an embodiment of the invention;
Fig. 3 is a structural schematic diagram of an electro-hydraulic proportional valve assembly without a filter device mounted in an embodiment of the invention;
Fig. 4 is an internal structural schematic diagram of a filter device provided in an embodiment of the invention; and
Fig. 5 is a schematic diagram of an electro-hydraulic proportional valve with a filter device mounted in an embodiment of the invention.

In the figures:
1. piston valve assembly; 11. piston rod;
2. bottom valve assembly;
3. electro-hydraulic proportional valve; 31. first inlet and outlet; and 32. second inlet and outlet;
4. filter device; 41. housing; 411. first flow passage; 412. second flow passage; 413. first opening; 414. second opening; 415. third opening; 42. filter assembly; 421. first primary filter portion; 422. secondary filter portion; and 423. second primary filter portion;
5. first one-way unloading valve; 51. first ball valve; and 52. first elastic member; and
6. second one-way unloading valve; 61. second ball valve; and 62. second elastic member.

### Detailed Description of the Embodiments

In the description of the invention, it is to be noted that terms "central", "upper", "lower", "left", "right", "vertical", "horizontal", "inner", "outer", etc. indicate orientation or position relations based on those shown in the accompanying drawings merely for the ease of description of the invention and for simplicity of the description, are not intended to indicate or imply that the referenced device or element must have a specific orientation and be constructed and operated in a specific orientation, and thus may not be interpreted as a limitation on the invention. In addition, terms "first", "second", etc. are merely descriptive, and may not be interpreted as indicating or implying relative importance. Terms "first position" and "second position" are two different positions.

In the description of the invention, it is to be noted that, unless explicitly specified or limited otherwise, terms "mounted", "connected", and "connection" are to be interpreted broadly, and may be, for example, interpreted as fixed connections, detachable connections, mechanical connections, electric connections, direct connections, indirect connections through intermediate media, or internal communication between two elements. For those of ordinary skill in the art, specific meanings of the above terms in the invention may be understood according to specific circumstances.

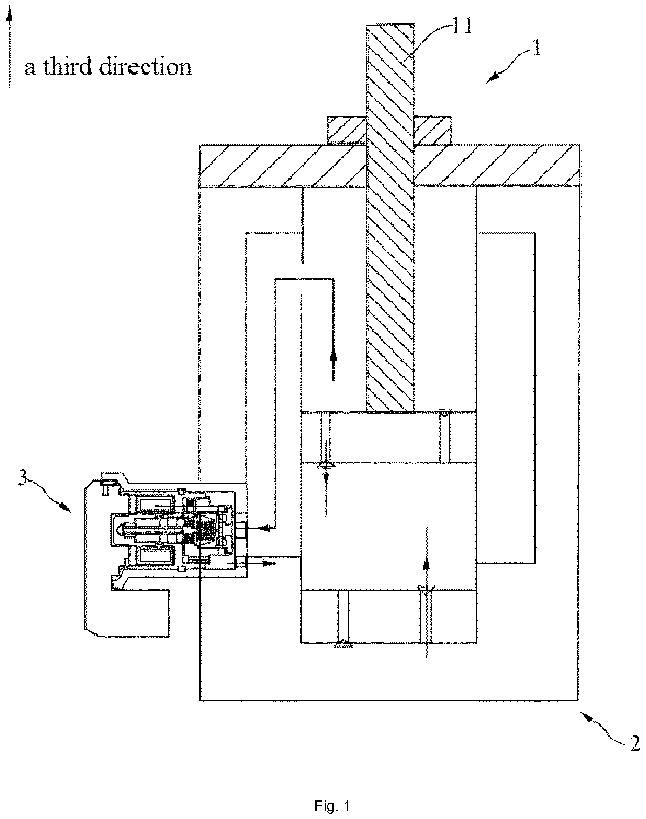

With reference to Figs. 1-5, in order to prevent impurities in a continuous damping control damper from entering an electro-hydraulic proportional valve 3 effectively, the embodiment provides a continuous damping control damper.

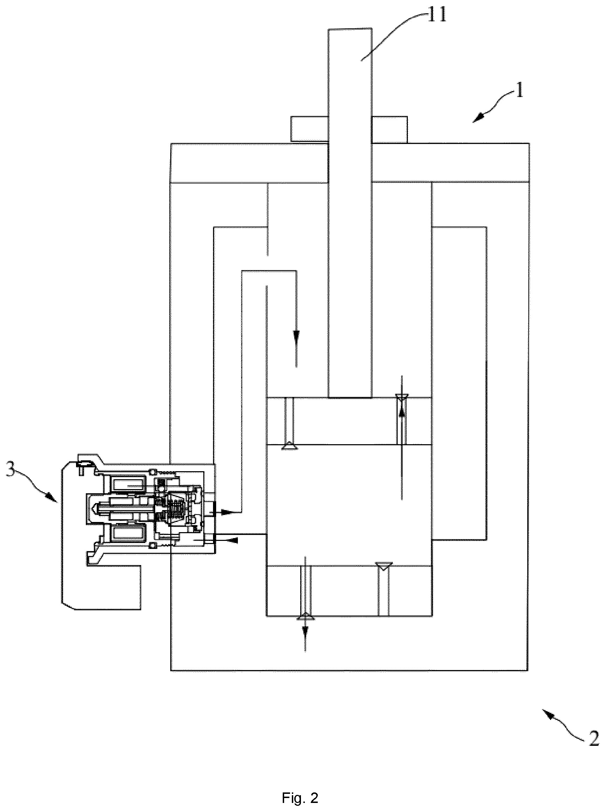

With reference to Figs. 1 and 2, the continuous damping control damper includes a piston valve assembly 1, a bottom valve assembly 2, and an electro-hydraulic proportional valve 3. The electro-hydraulic proportional valve 3 is provided with a first inlet and outlet 31 and a second inlet and outlet 32; and the piston valve assembly 1 includes a piston rod 11.

With reference to Fig. 1, when the piston rod 11 moves in a third direction, oil in the piston valve assembly 1 enters the electro-hydraulic proportional valve 3 by the first inlet and outlet 31, and the oil in the electro-hydraulic proportional valve 3 enters the bottom valve assembly 2 by the second inlet and outlet 32.

With reference to Fig. 2, when the piston rod 11 moves in a fourth direction, the oil in the bottom valve assembly 2 enters the electro-hydraulic proportional valve 3 by the first inlet and outlet 31, and the oil in the electro-hydraulic proportional valve 3 enters the piston valve assembly 1 by the second inlet and outlet 32. The third direction is opposite to the fourth direction.

With an orientation shown in Fig. 1 and 2 as an example, the third direction is vertically upward, and the fourth direction is vertically downward. A magnet is arranged at a bottom of the continuous damping control damper, to attract impurities.

Since metal impurities are attracted by the magnet on account of its magnetism, non-metal impurities are not attracted and still jam the electro-hydraulic proportional valve 3 upon entering the electro-hydraulic proportional valve 3. In a normal work process of the continuous damping control damper, as the impurities flow with the oil, some impurities enter the electro-hydraulic proportional valve 3 before being attracted by the magnet.

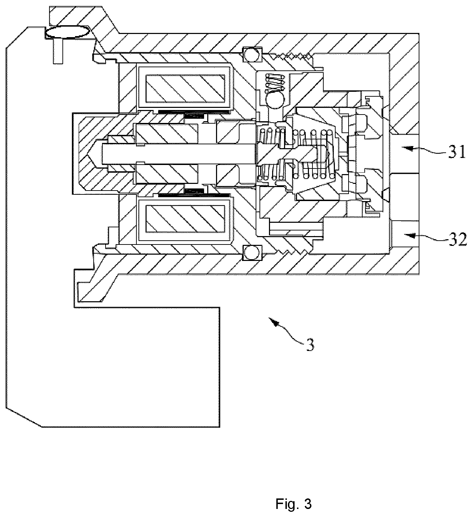

With reference to Figs. 3-5, in order to remove the impurities from the continuous damping control damper, in the embodiment, a filter device 4 is arranged in each of the first inlet and outlet 31 and the second inlet and outlet 32 of the electro-hydraulic proportional valve 3, where the filter device 4 includes a housing 41 and a filter assembly 42.

An internal structure of the electro-hydraulic proportional valve 3 is well known to those skilled in the art, and will not described in detail herein.

The housing 41 is internally provided with an accommodation cavity, the filter assembly 42 is arranged in the accommodation cavity, and the filter assembly 42 is configured to filter the oil entering the electro-hydraulic proportional valve 3.

In the embodiment, the filter device 4 is arranged in each of the first inlet and outlet 31 and the second inlet and outlet 32 of the electro-hydraulic proportional valve 3, and the filter device 4 is able to filter the oil flowing through the first inlet and outlet 31 and the second inlet and outlet 32, to remove the impurities from the oil effectively, and to prevent the impurities in the oil from entering the electro-hydraulic proportional valve 3.

Moreover, when the oil flows to a different direction, the flowing oil may wash away impurities adhering to the filter assembly 42. For example, when the oil enters the electro-hydraulic proportional valve 3 by the first inlet and outlet 31, and flows out of the electro-hydraulic proportional valve 3 by the second inlet and outlet 32, the filter device 4 in the first inlet and outlet 31 will filter the oil, the impurities will adhere to the filter device 4 in the first inlet and outlet 31, and the flowing oil will wash away the impurities adhering to the filter device 4 in the second inlet and outlet 32, to prevent the impurities from blocking the filter device 4. When the oil enters the electro-hydraulic proportional valve 3 by the second inlet and outlet 32, and flows out of the electro-hydraulic proportional valve 3 by the first inlet and outlet 31, the filter device 4 in the second inlet and outlet 32 will filter the oil, and the impurities will adhere to the filter device 4 in the second inlet and outlet 32. The flowing oil will wash away the impurities adhering to the filter device 4 in the first inlet and outlet 31, to prevent the impurities from blocking the filter device 4.

In some embodiments, an outer wall of the housing 41 is provided with an external thread, and inner walls of the first inlet and outlet 31 and the second inlet and outlet 32 are each provided with an internal thread matching the external thread, so that the filter devices 4 is in threaded connection in the inlets and outlets through the housing 41. The threaded connection facilitates detachment and replacement of the filter devices 4.

In some embodiments, the filter assembly 42 includes a plurality of stages of filter portions. In some embodiments, the filter assembly 42 includes a first primary filter portion 421, a secondary filter portion 422, and a second primary filter portion 423 which are arranged in sequence.

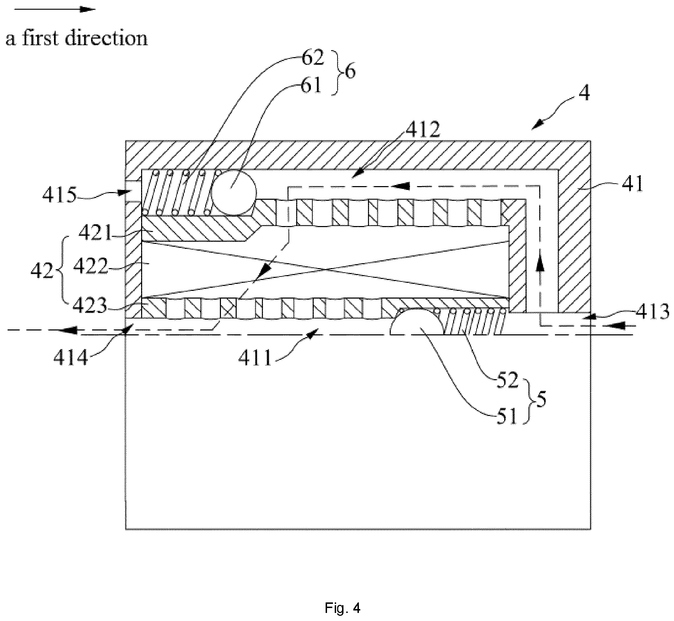

In Fig. 4, dashed lines with arrows indicate a flow path of the oil when the filter assembly 42 filters the oil entering the electro-hydraulic proportional valve 3. The oil entering the filter device 4 passes through the first primary filter portion 421, the secondary filter portion 422, and the second primary filter portion 423 in sequence, and then enters into the electro-hydraulic proportional valve 3.

In some embodiments, the oil entering the filter device 4 may also pass through the second primary filter portion 423, the secondary filter portion 422, and the first primary filter portion 421 in sequence, and then enter into the electro-hydraulic proportional valve 3.

In some embodiments, the first primary filter portion 421 is a metal wire net with meshes, such as a coarse copper wire net. The secondary filter portion 422 is a filter net cloth or filter paper through which the oil may pass, and carries out secondary filtering on the oil entering the electro-hydraulic proportional valve 3. The second primary filter portion 423 is a metal wire net with meshes.

In the embodiment, the filter assembly 42 divides the accommodation cavity into a first flow passage 411 and a second flow passage 412. The first flow passage 411 extends in an axial direction of the accommodation cavity, and is arranged coaxial with the accommodation cavity. The second flow passage 412 is positioned between the filter assembly 42 and the inner wall of the housing 41.

The oil entering the filter device 4 enters the first flow passage 411 by the second flow passage 412 and the filter assembly 42 in sequence, and then flows out of the filter device 4 by the first flow passage 411. Alternatively, the oil entering the filter device 4 enters the second flow passage 412 by the first flow passage 411 and the filter assembly 42 in sequence, and then enters the electro-hydraulic proportional valve 3 by the second flow passage 412.

With reference to Fig. 4, in order to prevent a situation that after the electro-hydraulic proportional valve 3 works for a long time, the impurities block the filter assembly 42, to fail the filter device 4, the oil may not pass through the filter assembly 42, and the electro-hydraulic proportional valve 3 may not work normally, in the embodiment, two ends of the first flow passage 411 are provided with openings, and a first one-way unloading valve 5 is arranged in the first flow passage 411, the first one-way unloading valve 5 being configured as follows: when the oil may not pass through the filter assembly 42, oil flowing in a first direction may open the first one-way unloading valve 5, so that the first flow passage 411 is in an opened state, and the oil may pass through the filter device 4 by the first flow passage 411.

In some embodiments, the first one-way unloading valve 5 includes a first ball valve 51 and a first elastic member 52. When the oil may not pass through the filter assembly 42, the oil flowing in the first direction enters the first flow passage 411, to apply pressure to the first ball valve 51, so that the first ball valve 51 compresses the first elastic member 52, and the first flow passage 411 is in the opened state.

In some embodiments, two ends of the second flow passage 412 are provided with openings, and a second one-way unloading valve 6 is arranged in the second flow passage 412, the second one-way unloading valve 6 being configured as follows: when the oil can not pass through the filter assembly 42, oil flowing in a second direction is able to open the second one-way unloading valve 6, so that the second flow passage 412 is in an opened state, and the oil is configured to pass through the filter device 4 by the second flow passage 412. The second direction is opposite to the first direction.

The second one-way unloading valve 6 includes a second ball valve 61 and a second elastic member 62. The oil flowing in the second direction enters the second flow passage 412, to apply pressure to the second ball valve 61, so that the second ball valve 61 compresses the second elastic member 62, and the second flow passage 412 is in the opened state.

With reference to Fig. 4, in the embodiment, a first side of the housing 41 is provided with a first opening 413, and a second side of the housing 41 is provided with a second opening 414 and a third opening 415. A first end of the first flow passage 411 is in communication with the first opening 413, and a second end of the first flow passage 411 is in communication with the second opening 414. A first end of the second flow passage 412 is in communication with the first opening 413, and a second end of the second flow passage 412 is in communication with the third opening 415.

In the embodiment, the first direction is a direction in which the second opening 414 points to the first opening 413.

In this embodiment, when one of the first one-way unloading valve 5 and the second one-way unloading valve 6 is opened, the other one is in a closed state, to ensure that only one of the first flow passage 411 and the second flow passage 412 is in the opened state, so that the oil may flow only in one direction in the filter device 4 all the time. Moreover, the first one-way unloading valve 5 and the second one-way unloading valve 6 have opposite unloading directions, so that even if the oil can not pass through the filter assembly 42, no matter how a flow direction of the oil is changed, the oil can pass through the filter device 4 all the time, and the electro-hydraulic proportional valve 3 is able to work normally all the time.

In some embodiments, a plurality of second one-way unloading valves 6 are arranged in the second flow passage 412 at intervals in a circumferential direction of an inner wall of the accommodation cavity. The plurality of second one-way unloading valves 6 is able to be opened or closed simultaneously. The second flow passage 412 includes a plurality of flow sub-passages arranged at intervals in the circumferential direction of the inner wall of the accommodation cavity, each flow sub-passage is internally provided with one second one-way unloading valve 6.

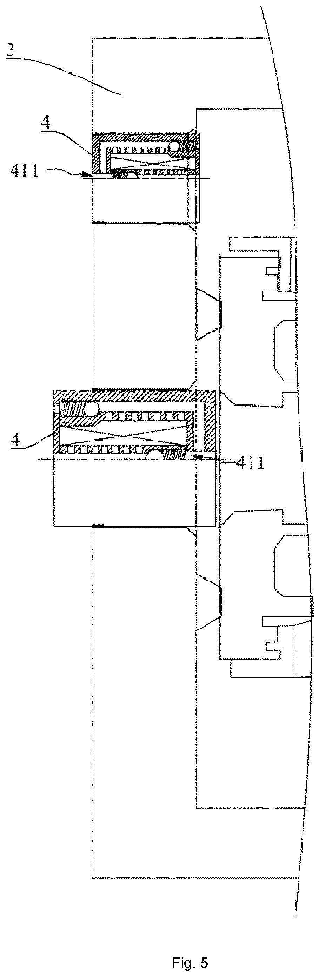

With reference to Fig. 5, in the embodiment, the filter device 4 in the first inlet and outlet 31 and the filter device in the second inlet and outlet 32 have opposite mounting directions. As for the opposite mounting directions, that is, a first opening 413 of the filter device 4 in the first inlet and outlet 31 is positioned inside the electro-hydraulic proportional valve 3, and a first opening 413 of the filter device 4 in the second inlet and outlet 32 is positioned outside the electro-hydraulic proportional valve 3.

If the oil may not pass through the filter devices 4, unloading states of the one-way unloading valves in the two filter devices 4 are as follows: Two first one-way unloading valves 5 carry out unloading simultaneously, or two second one-way unloading valves 6 carry out unloading simultaneously.

In the electro-hydraulic proportional valve 3 provided by the invention, the filter device 4 is arranged in each of the first inlet and outlet 31 and the second inlet and outlet 32, and the filter assembly 42 of the filter device 4 is able to filter the oil flowing through the first inlet and outlet 31 and the second inlet and outlet 32, to remove the impurities from the oil effectively, so as to prevent the impurities in the oil from entering the electro-hydraulic proportional valve 3, and to ensure that the electro-hydraulic proportional valve 3 works normally.

Moreover, when the oil flows to a different direction, the flowing oil is able to wash away the impurities adhering to the filter assembly 42. When the oil enters the electro-hydraulic proportional valve 3 by the first inlet and outlet 31, and flows out of the electro-hydraulic proportional valve 3 by the second inlet and outlet 32, the filter device 4 in the first inlet and outlet 31 will filter the oil, the impurities will adhere to the filter device 4 in the first inlet and outlet 31, and the flowing oil will wash away impurities adhering to the filter device 4 in the second inlet and outlet 32, to prevent the impurities from blocking the filter device 4. When the oil enters the electro-hydraulic proportional valve 3 by the first inlet and outlet 31, and flows out of the electro-hydraulic proportional valve 3 by the second inlet and outlet 32, the filter device 4 in the second inlet and outlet 32 will filter the oil, and the impurities will adhere to the filter device 4 in the second inlet and outlet 32. The flowing oil will wash away the impurities adhering to the filter device 4 in the first inlet and outlet 31, to prevent the impurities from blocking the filter device 4.

The continuous damping control damper provided by the invention includes the electro-hydraulic proportional valve 3 described above. The damper may prevent the impurities in oil from entering the electro-hydraulic proportional valve 3 effectively and ensure that the electro-hydraulic proportional valve 3 works normally, and further ensure that the continuous damping control damper works normally.

## Claims

1. An electro-hydraulic proportional valve assembly, the electro-hydraulic proportional valve (3) being provided with a first inlet and outlet (31) and a second inlet and outlet (32), and a filter device (4) being arranged in each of the first inlet and outlet (31) and the second inlet and outlet (32); wherein the filter device (4) comprises:
a housing (41), the housing (41) being internally provided with an accommodation cavity; and
a filter assembly (42) arranged in the accommodation cavity, and configured to filter oil entering the electro-hydraulic proportional valve (3); wherein the filter assembly (42) divides the accommodation cavity into a first flow passage (411) and a second flow passage (412);
the first flow passage (411) extends in an axial direction of the accommodation cavity, and is arranged coaxial with the accommodation cavity;
the second flow passage (412) is positioned between the filter assembly (42) and an inner wall of the housing (41);
oil entering the filter device (4) enters into the first flow passage (411) by the second flow passage (412) and the filter assembly (42) in sequence, and then enters the electro-hydraulic proportional valve (3) by the first flow passage (411); or,
oil entering the filter device (4) enters into the second flow passage (412) by the first flow passage (411) and the filter assembly (42) in sequence, and then enters the electro-hydraulic proportional valve (3) by the second flow passage (412); wherein two ends of the first flow passage (411) are provided with openings, and a first one-way unloading valve (5) is arranged in the first flow passage (411), the first one-way unloading valve (5) being configured as follows: when oil cannot pass through the filter assembly (42), oil flowing in a first direction is able to open the first one-way unloading valve (5), so that the first flow passage (411) is in an opened state, and oil is able to pass through the filter device (4) by the first flow passage (411).

2. The electro-hydraulic proportional valve assembly according to claim 1, wherein two ends of the second flow passage (412) are provided with openings, and a second one-way unloading valve (6) is arranged in the second flow passage (412), the second one-way unloading valve (6) being configured as follows: when oil cannot pass through the filter assembly (42), oil flowing in a second direction is able to open the second one-way unloading valve (6), so that the second flow passage (412) is in an opened state, and the oil is able to pass through the filter device (4) by the second flow passage (412); and
the second direction is opposite to the first direction.

3. The electro-hydraulic proportional valve assembly according to claim 2, wherein when one of the first one-way unloading valve (5) and the second one-way unloading valve (6) is opened, the other one is in a closed state.

4. The electro-hydraulic proportional valve assembly according to claim 2, wherein a plurality of second one-way unloading valves (6) are arranged in the second flow passage (412) at intervals in a circumferential direction of an inner wall of the accommodation cavity.

5. The electro-hydraulic proportional valve assembly according to claim 4, wherein the second flow passage (412) comprises a plurality of flow sub-passages, the plurality of flow sub-passages being arranged at intervals in the circumferential direction of the inner wall of the accommodation cavity, and each flow sub-passage being internally provided with one second one-way unloading valve (6).

6. The electro-hydraulic proportional valve assembly according to claim 2, wherein a first side of the housing (41) is provided with a first opening (413), and a second side of the housing (41) is provided with a second opening (414) and a third opening (415);
a first end of the first flow passage (411) is in communication with the first opening (413), and a second end of the first flow passage (411) is in communication with the second opening (414); and
a first end of the second flow passage (412) is in communication with the first opening (413), and a second end of the second flow passage (412) is in communication with the third opening (415).

7. The electro-hydraulic proportional valve assembly according to any one of claims 1-6, wherein the filter assembly (42) comprises a plurality of stages of filter portions (421, 422, 423).

8. A continuous damping control damper, comprising the electro-hydraulic proportional valve (3) assembly according to any one of claims 1-7.

## Patentansprüche

1. Eine elektrohydraulische Proportionalventilanordnung, wobei das elektrohydraulische Proportionalventil (3) mit einem ersten Einlass und Auslass (31) und einem zweiten Einlass und Auslass (32) versehen ist und eine Filtervorrichtung (4) in jedem der ersten Einlass und Auslass (31) und der zweiten Einlass und Auslass (32) angeordnet ist; wobei die Filtervorrichtung (4) umfasst:
ein Gehäuse (41), wobei das Gehäuse (41) innen mit einem Aufnahmeraum versehen ist; und
eine Filteranordnung (42), die in dem Aufnahmeraum angeordnet und so konfiguriert ist, dass sie in das elektrohydraulische Proportionalventil (3) eintretendes Öl filtert; wobei die Filteranordnung (42) den Aufnahmeraum in einen ersten Strömungskanal (411) und einen zweiten Strömungskanal (412) unterteilt;
wobei sich der erste Strömungskanal (411) in axialer Richtung des Aufnahmeraums erstreckt und koaxial zum Aufnahmeraum angeordnet ist;
der zweite Strömungskanal (412) zwischen der Filterbaugruppe (42) und einer Innenwand des Gehäuses (41) positioniert ist;
in die Filtervorrichtung (4) eintretendes Öl gelangt über den zweiten Strömungskanal (412) und die Filterbaugruppe (42) nacheinander in den ersten Strömungskanal (411) und dann über den ersten Strömungskanal (411) in das elektrohydraulische Proportionalventil (3); oder
das in die Filtervorrichtung (4) eintretende Öl gelangt nacheinander durch den ersten Strömungskanal (411) und die Filterbaugruppe (42) in den zweiten Strömungskanal (412) und tritt dann durch den zweiten Strömungskanal (412) in das elektrohydraulische Proportionalventil (3) ein; wobei die beiden Enden des ersten Strömungskanals (411) mit Öffnungen versehen sind und ein erstes Einweg-Entlastungsventil (5) im ersten Strömungskanal (411) angeordnet ist, wobei das erste Einweg-Entlastungsventil (5) wie folgt konfiguriert ist: wenn Öl nicht durch die Filterbaugruppe (42) fließen kann, kann das in einer ersten Richtung fließende Öl das erste Einweg-Entlastungsventil (5) öffnen, so dass sich der erste Strömungskanal (411) in einem geöffneten Zustand befindet und Öl durch den ersten Strömungskanal (411) durch die Filtervorrichtung (4) fließen kann.

2. Elektrohydraulische Proportionalventilanordnung nach Anspruch 1, wobei zwei Enden des zweiten Strömungskanals (412) mit Öffnungen versehen sind und ein zweites Einweg-Entlastungsventil (6) im zweiten Strömungskanal (412) angeordnet ist, wobei das zweite Einweg-Entlastungsventil (6) wie folgt konfiguriert ist: wenn Öl nicht durch die Filterbaugruppe (42) fließen kann, kann das in einer zweiten Richtung fließende Öl das zweite Einweg-Entlastungsventil (6) öffnen, so dass sich der zweite Strömungskanal (412) in einem geöffneten Zustand befindet und das Öl durch den zweiten Strömungskanal (412) durch die Filtervorrichtung (4) fließen kann; und
die zweite Richtung ist entgegengesetzt zur ersten Richtung.

3. Elektrohydraulische Proportionalventilanordnung nach Anspruch 2, wobei, wenn eines der ersten Einweg-Entlastungsventile (5) und das zweite Einweg-Entlastungsventil (6) geöffnet ist, das andere in einem geschlossenen Zustand ist.

4. Elektrohydraulische Proportionalventilanordnung nach Anspruch 2, wobei mehrere zweite Einweg-Entlastungsventile (6) in dem zweiten Strömungskanal (412) in Abständen in Umfangsrichtung einer Innenwand des Aufnahmeraums angeordnet sind.

5. Elektrohydraulische Proportionalventilanordnung nach Anspruch 4, wobei der zweite Strömungskanal (412) mehrere Strömungsunterkanäle umfasst, wobei die mehreren Strömungsunterkanäle in Abständen in Umfangsrichtung der Innenwand des Aufnahmeraums angeordnet sind und jeder Strömungsunterkanal innen mit einem zweiten Einweg-Entlastungsventil (6) versehen ist.

6. Elektrohydraulische Proportionalventilanordnung nach Anspruch 2, wobei eine erste Seite des Gehäuses (41) mit einer ersten Öffnung (413) versehen ist und eine zweite Seite des Gehäuses (41) mit einer zweiten Öffnung (414) und einer dritten Öffnung (415) versehen ist;
ein erstes Ende des ersten Strömungskanals (411) mit der ersten Öffnung (413) in Verbindung steht und ein zweites Ende des ersten Strömungskanals (411) mit der zweiten Öffnung (414) in Verbindung steht; und
ein erstes Ende des zweiten Strömungskanals (412) mit der ersten Öffnung (413) in Verbindung steht und ein zweites Ende des zweiten Strömungskanals (412) mit der dritten Öffnung (415) in Verbindung steht.

7. Elektrohydraulische Proportionalventilanordnung nach einem der Ansprüche 1 bis 6, wobei die Filteranordnung (42) mehrere Stufen von Filterabschnitten (421, 422, 423) umfasst.

8. Eine kontinuierliche Dämpfungsregelungsklappe, die die elektrohydraulische Proportionalventilanordnung (3) gemäß einem der Ansprüche 1 bis 7 umfasst.

## Revendications

1. Ensemble de soupape proportionnelle électrohydraulique, la soupape proportionnelle électrohydraulique (3) étant pourvue d'une première entrée et sortie (31) et d'une deuxième entrée et sortie (32), et un dispositif de filtration (4) étant disposé dans chacune des première entrée et sortie (31) et deuxième entrée et sortie (32) ; dans lequel le dispositif de filtration (4) comprend :
un boîtier (41), le boîtier (41) étant muni à l'intérieur d'une cavité de logement ; et
un ensemble de filtre (42) disposé dans la cavité de logement et configuré pour filtrer l'huile entrant dans la vanne proportionnelle électrohydraulique (3) ; dans lequel l'ensemble de filtre (42) divise la cavité de logement en un premier passage d'écoulement (411) et un second passage d'écoulement (412) ;
le premier passage d'écoulement (411) s'étendant dans une direction axiale de la cavité de logement et étant disposé de manière coaxiale avec la cavité de logement ;
le deuxième passage d'écoulement (412) est positionné entre l'ensemble de filtre (42) et une paroi intérieure du boîtier (41) ;
l'huile entrant dans le dispositif de filtration (4) pénètre dans le premier passage d'écoulement (411) par le second passage d'écoulement (412) et l'ensemble de filtration (42) dans cet ordre, puis pénètre dans la vanne proportionnelle électrohydraulique (3) par le premier passage d'écoulement (411) ; ou
l'huile entrant dans le dispositif de filtration (4) pénètre dans le deuxième passage d'écoulement (412) par le premier passage d'écoulement (411) et l'ensemble de filtration (42) dans l'ordre, puis pénètre dans la vanne proportionnelle électrohydraulique (3) par le deuxième passage d'écoulement (412) ; dans lequel les deux extrémités du premier passage d'écoulement (411) sont pourvues d'ouvertures, et une première soupape de décharge unidirectionnelle (5) est disposée dans le premier passage d'écoulement (411), la première soupape de décharge unidirectionnelle (5) étant configurée comme suit : lorsque l'huile ne peut pas passer à travers l'ensemble de filtrage (42), l'huile s'écoulant dans une première direction est capable d'ouvrir la première soupape de décharge unidirectionnelle (5), de sorte que le premier passage d'écoulement (411) est dans un état ouvert, et l'huile est capable de passer à travers le dispositif de filtrage (4) par le premier passage d'écoulement (411).

2. Ensemble de soupape proportionnelle électrohydraulique selon la revendication 1, dans lequel les deux extrémités du deuxième passage d'écoulement (412) sont pourvues d'ouvertures, et une deuxième soupape de décharge unidirectionnelle (6) est disposée dans le deuxième passage d'écoulement (412), la deuxième soupape de décharge unidirectionnelle (6) étant configurée comme suit : lorsque l'huile ne peut pas passer à travers l'ensemble de filtre (42), l'huile s'écoulant dans une deuxième direction peut ouvrir la deuxième soupape de décharge unidirectionnelle (6), de sorte que le deuxième passage d'écoulement (412) est dans un état ouvert, et l'huile peut passer à travers le dispositif de filtration (4) par le deuxième passage d'écoulement (412) ; et
la deuxième direction est opposée à la première direction.

3. Ensemble de soupape proportionnelle électrohydraulique selon la revendication 2, dans lequel lorsque l'une des première soupape de décharge unidirectionnelle (5) et deuxième soupape de décharge unidirectionnelle (6) est ouverte, l'autre est dans un état fermé.

4. Ensemble de soupape proportionnelle électrohydraulique selon la revendication 2, dans lequel une pluralité de secondes soupapes de décharge unidirectionnelles (6) sont disposées dans le second passage d'écoulement (412) à intervalles réguliers dans une direction circonférentielle d'une paroi intérieure de la cavité de logement.

5. Ensemble de soupapes proportionnelles électrohydrauliques selon la revendication 4, dans lequel le deuxième passage d'écoulement (412) comprend une pluralité de sous-passages d'écoulement, la pluralité de sous-passages d'écoulement étant disposés à intervalles réguliers dans la direction circonférentielle de la paroi interne de la cavité de logement, et chaque sous-passage d'écoulement étant muni à l'intérieur d'une deuxième soupape de décharge unidirectionnelle (6).

6. Ensemble de soupape proportionnelle électrohydraulique selon la revendication 2, dans lequel un premier côté du boîtier (41) est muni d'une première ouverture (413), et un deuxième côté du boîtier (41) est muni d'une deuxième ouverture (414) et d'une troisième ouverture (415) ;
une première extrémité du premier passage d'écoulement (411) est en communication avec la première ouverture (413), et une deuxième extrémité du premier passage d'écoulement (411) est en communication avec la deuxième ouverture (414) ; et
une première extrémité du deuxième passage d'écoulement (412) est en communication avec la première ouverture (413), et une deuxième extrémité du deuxième passage d'écoulement (412) est en communication avec la troisième ouverture (415).

7. Ensemble de soupape proportionnelle électrohydraulique selon l'une quelconque des revendications 1 à 6, dans lequel l'ensemble de filtre (42) comprend une pluralité d'étages de parties de filtre (421, 422, 423).

8. Amortisseur à commande continue, comprenant l'ensemble de soupape proportionnelle électrohydraulique (3) selon l'une quelconque des revendications 1 à 7.
